# EUROPEAN PATENT APPLICATION

(11) **EP 1 937 030 A1**
(43) Date of publication of application: **25.06.2008**
(21) Application number: 06126904.9
(22) Date of filing: 21.12.2006
(51) Int. Cl.: H04R 1/02, F16B 21/12

(54) **Electronic device with detachable anti-vibration speaker assembly**

(71) Applicant: Hannspree, Inc., Taipei City (TW)
(72) Inventor: Lin, Wen-Pin, Taipei City (TW); Hsieh, Kuan-Cheng, Taipei City (TW); Lo, Shih-Po, Taipei City (TW); Chiu, Yi-Chung, Taipei City (TW)
(74) Representative: Texier, Christian

(57) **Abstract**

An electronic device includes a stand (30), a speaker assembly (20), and a positioning structure (40) for interconnecting the stand (30) and speaker assembly (20) . The stand (30) is formed with a blind hole (31), and includes a blocking member (32) extending thereinto. The speaker assembly (20) is disposed on the stand (30), and includes a speaker casing (22) of an elastic material and formed with a reception hole (26). The positioning structure (40) includes a positioning member (41) disposed in the blind hole (31) and having a shoulder (412), and a catch protrusion (411) extending upwardly from the shoulder (412), and a resilient member (42) disposed between the stand (30) and positioning member (41) for biasing the latter upwardly such that the shoulder (412) abuts against the blocking member (32) and the catch protrusion (411) engages the reception hole (26). The catch protrusion (411) is disengaged from the reception hole (26) upon application of a sufficient force to the speaker casing (22).

## Description

The present invention relates to a detachable anti-vibration speaker assembly, more particularly to an electronic device having a detachable anti-vibration speaker assembly.

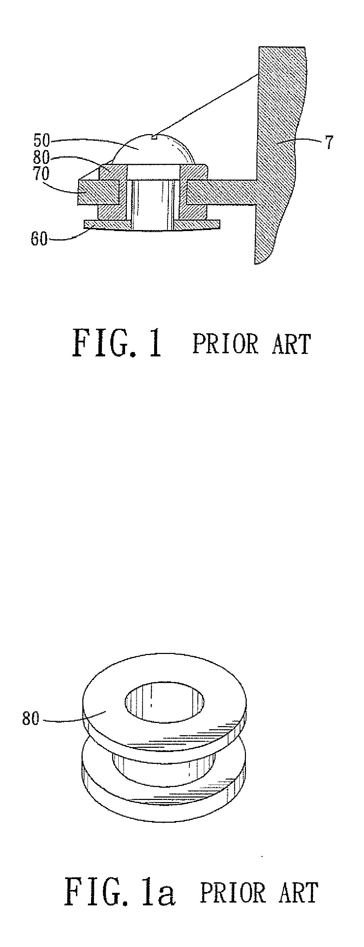

Fig. 1 shows a connection structure for a detachable speaker in a conventional electronic device, such as a flat panel display. A rubber pad 80 (see Fig. 1a) is interposed amongst a screw 50, a speaker casing 70 of a speaker 7, and a supporting member 60 of a frame (not shown) of the electronic device. The rubber pad 80 functions to absorb vibrations generated by the speaker 7, as well as resonance resulting from the vibrations.

As a result of the use of the screw 50 and the rubber pad 80, however, detachment and attachment of the speaker 7 are difficult to perform, particularly since the use of a tool is required. This not only is troublesome for users, but results in a time-consuming and, ultimately, costly assembly process. Furthermore, the speaker 7 and/or the frame of the electronic device may be damaged during attachment and detachment of the speaker 7. Finally, only a minimal amount of vibration and resonance are able to be absorbed by the rubber pad 80 due to the small size and configuration of the same.

Therefore, the object of the present invention is to provide an electronic device with a detachable anti-vibration speaker assembly that allows for easy attachment and detachment of the speaker assembly without the use of a tool, that provides for a good vibration and resonance absorption effect, and that prevents damage to the speaker assembly and the electronic device during attachment and detachment of the former, as well as to a support surface on which the speaker assembly may be placed.

The electronic device of this invention includes a stand, a speaker assembly, and a positioning structure for interconnecting the stand and the speaker assembly.

The stand has an upper surface formed with a blind hole, and includes a blocking member extending into the hole.

The speaker assembly is disposed on the upper surface of the stand, and includes a speaker casing made at least partially of an elastic material and having a bottom surface formed with a reception hole.

The positioning structure includes: a positioning member disposed in the blind hole and having a shoulder, and a catch protrusion extending upwardly from the shoulder; and a resilient member disposed in the blind hole between the stand and the positioning member. The resilient member biases the positioning member upwardly such that the shoulder abuts against the blocking member of the stand and the catch protrusion extends outwardly from the blind hole to engage the reception hole in the speaker casing.

The catch protrusion of the positioning member is disengaged from the reception hole in the speaker casing upon application of a sufficient force to the speaker casing to thereby allow for detachment of the speaker assembly from the stand.

Other features and advantages of the present invention will become apparent in the following detailed description of the preferred embodiment with reference to the accompanying drawings, of which:
Fig. 1 is a fragmentary sectional view of a conventional structure used for a detachable speaker of an electronic device;
Fig. 1a is a perspective view of a rubber pad used in the conventional structure of Fig. 1;
Fig. 2 is an exploded perspective view of a speaker assembly according to a preferred embodiment of the present invention;
Fig. 3a is a bottom perspective view of a speaker casing of the speaker assembly of Fig. 2;
Fig. 3b is a schematic end view of the speaker casing;
Fig. 4 is a perspective view of a flat panel display according to the preferred embodiment of the present invention;
Fig. 5 is a fragmentary sectional view of the flat panel display and the speaker assembly of the preferred embodiment;
Fig. 6 is a fragmentary perspective view used to describe attachment and detachment of the speaker assembly to and from the flat panel display of the preferred embodiment; and
Fig. 7 is a perspective view of the flat panel display and a pair of the speaker assemblies of the preferred embodiment.

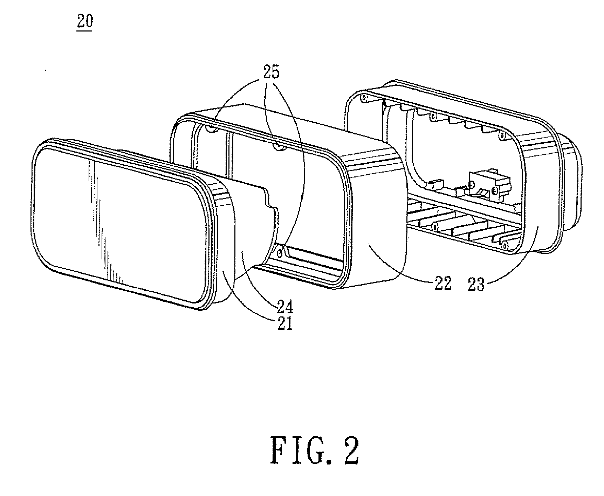

As shown in Figs. 2 to 7, an electronic device according to a preferred embodiment of the present invention is configured as a flat panel display 10.

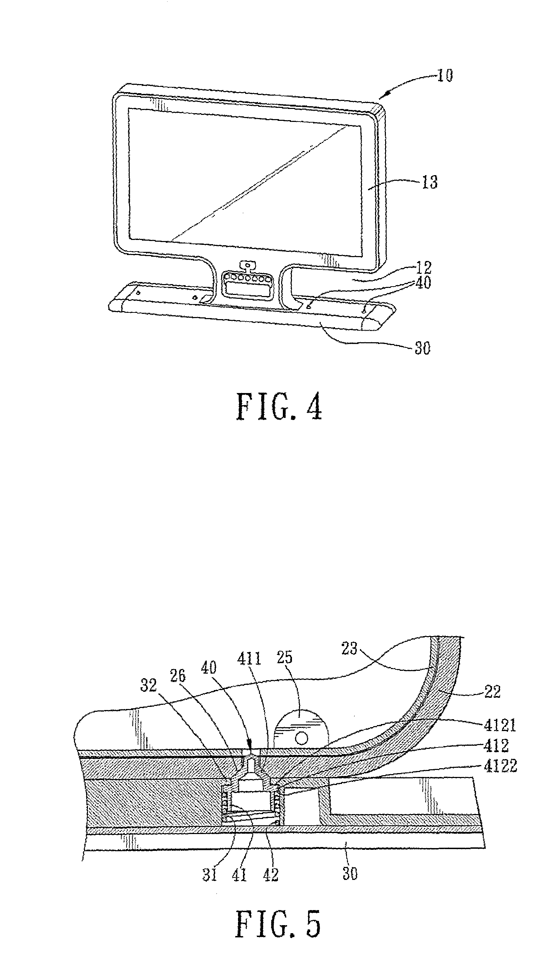

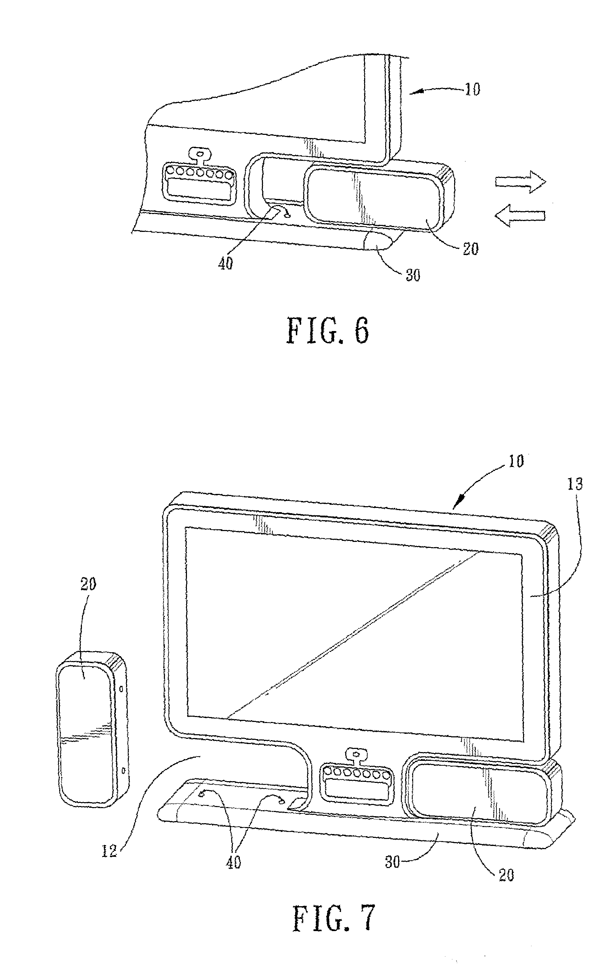

With particular reference to Figs. 4 and 7, the flat panel display 10 includes a stand 30, a display panel 13 disposed on the stand 30, a pair of speaker assemblies 20, and a positioning structure 40. Two speaker slots 12 are defined between the stand 30 and the display panel 13, and the speaker assemblies 20 are removably received in speaker slots 12, respectively.

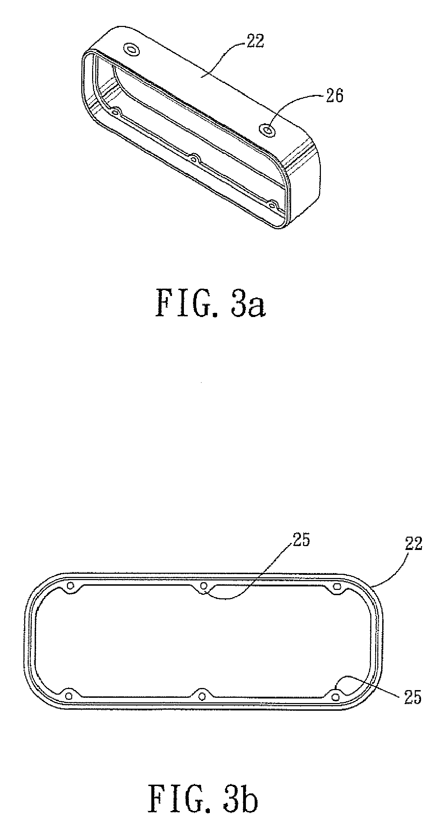

Referring to Figs. 2, 3a, and 3b, each of the speaker assemblies 20 includes a front frame 21, a speaker driver 24 mounted to the front frame 21, a rear frame 23, and a speaker casing 22 in which the front frame 21 and the rear frame 23 are disposed. In more detail, for each of the speaker assemblies 20, the speaker casing 22 has a front portion and a rear portion, and the front frame 21 with the speaker driver 24 mounted thereto is disposed in the front portion and the rear frame 23 is disposed in the rear portion. The speaker casing 22 of each of the speaker assemblies 20 surrounds the corresponding front frame 21 and the rear frame 23.

Each of the speaker casings 22 is made at least partially of an elastic material capable of absorbing vibration generated by the speaker drivers 24 and resonance resulting from such vibration. In this embodiment, each of the speaker casings 22 is formed as a single piece that is made entirely of a rubber material selected from the group consisting of silicone rubber (SR), natural rubber (NR), isoprene rubber (IR), styrene-butadiene rubber (SBR), butadiene rubber (BR), polychloroprene rubber (CR), butyl rubber (IIR), nitrile rubber (NBR), ethylene-propylene rubber (EPM), and ethylene-propylenediene rubber (EPDM).

The speaker casing 22 of each of the speaker assemblies 20 has an inner surface, and includes at least one elastic rib 25 extending radially from the inner surface. In this embodiment, six of the elastic ribs 25 are formed extending radially from the inner surface of each of the speaker casings 22. For each of the speaker assemblies 20, the front frame 21 and the rear frame 23 abut against the elastic ribs 25, that is, the elastic ribs 25 are interposed between the front frame 21 and the rear frame 23 to thereby separate the front frame 21 from the rear frame 23.

In addition, each of the speaker casings 22 has a bottom surface, and at least one reception hole 26 is formed in the bottom surface. In this embodiment, a pair of the reception holes 26 is formed in each of the speaker casings 22, and each of the reception holes 26 is defined by a concave hole-defining wall (see Fig. 5).

Referring to Figs. 4 and 5, the stand 30 has an upper surface, and a plurality of blind holes 31 are formed in the upper surface of the stand 30. In the preferred embodiment, a pair of the blind holes 31 is formed communicating spatially with each of the speaker slots 12. The stand 30 further includes a plurality of blocking members 32 extending respectively into the blind holes 31.

The positioning structure 40 includes a plurality of positioning members 41 and a plurality of resilient members 42. As shown in Fig. 5, each of the positioning members 41 is disposed in a respective one of the blind holes 31, and each of the resilient members 42 is disposed in a respective one of the blind holes 31 between the stand 30 and a respective one of the positioning members 41.

Each of the positioning members 41 has a shoulder 412, and a catch protrusion 411 extending upwardly from the shoulder 412. The shoulder 412 of each of the positioning members 41 has a first face 4121 abutting against the blocking member 32 in a respective one of the blind holes 31, and a second face 4122 opposite to the first face 4121. In the preferred embodiment, each of the catch protrusions 411 is a convex protrusion that complements the concave hole-defining walls defining the reception holes 26 in the speaker casings 22.

In this embodiment, each of the resilient members 42 is disposed between the second face 4122 of the shoulder 412 of a respective one of the positioning members 41 and the stand 30. Each of the resilient members 42 biases a respective one of the positioning members 41 upwardly such that the shoulder 412 thereof abuts against a respective one of the blocking members 32 of the stand 30 and the catch protrusion 411 thereof extends outwardly from a respective one of the blind holes 31 to engage a respective one of the reception holes 26 in a corresponding one of the speaker casings 22. The resilient members 42 are coiled compression springs in this embodiment.

As described above, a pair of the reception holes 26 is formed in each of the speaker assemblies 20, and a pair of the blind holes 31 (with an assembly of one of the positioning members 41 and one of the resilient members 42 disposed in each of the blind holes 31) is provided spatially communicating with each of the speaker slots 12. However, the number of these elements is not limited to that described and may be varied as needed depending on, for example, the design and size of the speaker assemblies 20 and the stand 30. The shapes of the reception holes 26 in the speaker casings 22 and the catch protrusions 411 of the positioning members 41 may also be varied as needed, and are not limited to the concave-convex configuration described above.

Referring to Figs. 6 and 7, the speaker assemblies 20 may be detached from the stand 30 by simply pulling the speaker assemblies 20 out from the speaker slots 12. To reattach the speaker assemblies 20, the speaker assemblies 20 are slid back into the speaker slots 12, making sure that the bottom face of the speaker casing 22 is facing downward. In either case, each of the corresponding ones of the positioning members 41 receives a downward force by contact with the speaker casing 22 to thereby be pushed into the respective one of the blind holes 31 in the stand 30 against the biasing force of the respective one of the resilient members 42. When the downward force is released from the positioning member 41 either as a result of the speaker assembly 20 being removed from the corresponding speaker slot 12 or as a result of a corresponding one of the blind holes 31 in the stand 30 being aligned with the positioning member 41 of the positioning structure 40, the positioning member 41 is biased to protrude back out from the corresponding blind hole 31 to thereby extend outwardly from the stand 30.

Fig. 7 illustrates the present invention in a state where one of the speaker assemblies 20 is fully detached from the flat panel display 10 and placed vertically on a supporting surface (not shown), and the other speaker assembly 20 is attached to the stand 30. Since the speaker casings 22 fully surround and therefore protect the speaker assemblies 20, either or both of the speaker assemblies 20 may be detached from the flat panel display 10 and placed on the supporting surface without damaging the speaker assemblies 20 or the supporting surface.

In the flat panel display 10 of the present invention described above, the speaker assemblies 20 may be easily attached to and detached from the flat panel display 10 without requiring the use of any tools. This provides convenience to users and reduces assembly time during manufacture. Furthermore, the configuration used to allow for attachment and detachment of the speaker assemblies 20 is such that damage to the speaker assemblies 20, the stand 30, and the display panel 13 is prevented. Finally, through the structure and material used for the speaker casings 22 of the speaker assemblies 20, not only is damage to the speaker assemblies 20 and a supporting surface prevented as described above, regardless of how the speaker assemblies 20 are positioned on the supporting surface, a superior vibration and resonance absorption effect is achieved as well.

## Claims

1. An electronic device including a stand (30), a speaker assembly (20), and a positioning structure (40) for interconnecting said stand (30) and said speaker assembly (20), said electronic device being
**characterized by**:
said stand (30) having an upper surface formed with a blind hole (31), and including a blocking member (32) extending into said blind hole (31);
said speaker assembly (20) being disposed on said upper surface of said stand (30), and including a speaker casing (22) made at least partially of an elastic material and having a bottom surface formed with a reception hole (26); and
said positioning structure (40) including
a positioning member (41) disposed in said blind hole (31) and having a shoulder (412), and a catch protrusion (411) extending upwardly from said shoulder (412), and
a resilient member (42) disposed in said blind hole (31) between said stand (30) and said positioning member (41), said resilient member (42) biasing said positioning member (41) upwardly such that said shoulder (412) abuts against said blocking member (32) of said stand (30) and said catch protrusion (411) extends outwardly from said blind hole (31) to engage said reception hole (26) in said speaker casing (22);
said catch protrusion (411) of said positioning member (41) being disengaged from said reception hole (26) in said speaker casing (22) upon application of a sufficient force to said speaker casing (22) to thereby allow for detachment of said speaker assembly (20) from said stand (30).

2. The electronic device of claim 1, **characterized in that** said reception hole (26) in said speaker casing (22) is defined by a concave hole-defining wall and said catch protrusion (411) of said positioning member (41) is a convex protrusion that complements said hole-defining wall.

3. The electronic device according to any one of the preceding claims, **characterized in that** said shoulder (412) has a first face (4121) abutting against said blocking member (32), and a second face (4122) opposite to said first face (4121), said resilient member (42) being disposed between said second face (4122) and said stand (30).

4. The electronic device according to any one of the preceding claims, **characterized in that** said resilient member (41) is a coiled compression spring.

5. The electronic device according to any one of the preceding claims, **characterized in that** said speaker casing (22) is made at least partially of a rubber material selected from the group consisting of silicone rubber (SR), natural rubber (NR), isoprene rubber (IR), styrene-butadiene rubber (SBR), butadiene rubber (BR), polychloroprene rubber (CR), butyl rubber (IIR), nitrile rubber (NBR), ethylene-propylene rubber (EPM), and ethylene-propylenediene rubber (BPDM).

6. The electronic device according to any one of the preceding claims, **characterized in that** said speaker casing (22) has a front portion and a rear portion, said speaker assembly (20) further including a front frame (21) disposed in said front portion of said speaker casing (22), and a rear frame (23) disposed in said rear portion of said speaker casing (22), said speaker casing (22) surrounding said front frame (21) and said rear frame (23).

7. The electronic device of claim 6, **characterized in that** said speaker casing (22) has an inner surface, and includes at least one elastic rib (25) extending radially from said inner surface.

8. The electronic device of claim 7, **characterized in that** said front frame (21) and said rear frame (23) abut against said elastic rib (25) of said speaker casing (22).

9. The electronic device of claim 8, **characterized in that** said speaker casing (22) includes a plurality of said elastic ribs (25).

10. The electronic device according to any one of claims 6 to 9, **characterized in that** said speaker casing (22) is formed as a single piece.

11. The electronic device according to any one of claims 6 to 10, **characterized in that** said speaker assembly (20) further includes a speaker driver (24) mounted to said front frame (21).

12. The electronic device according to any one of the preceding claims, further **characterized by** a display panel (13) disposed on said stand (30).

13. The electronic device of claim 12, **characterized in that** a speaker slot (12) is defined between said stand (30) and said display panel (13), said blind hole (31) in said stand (30) communicating spatially with said speaker slot (12), said speaker assembly (20) being removably received in said speaker slot (12).

14. The electronic device according to any one of the preceding claims, **characterized in that** said stand (30) is formed with a plurality of said blind holes (31), each having a respective said blocking member (32) extending therein, said bottom surface of said speaker casing (22) being formed with a plurality of said reception holes (26), said positioning structure (40) including a plurality of said positioning members (41), each disposed in a respective one of said blind holes (31), and a plurality of said resilient members (42), each disposed in a respective one of said blind holes (31) between said stand (30) and a respective one of said positioning members (41).
